# EUROPÄISCHE PATENTSCHRIFT

(11) **EP 0 360 179 B1**
(45) Veröffentlichungstag und Bekanntmachung des Hinweises auf die Patenterteilung: **18.08.1993**
(21) Anmeldenummer: 89117169.6
(22) Anmeldetag: 16.09.1989
(51) Int. Cl.: G01M 17/00

(54) **Rollenprüfstand für Kraftfahrzeuge**
Roll test bench for vehicles
Banc d'essai à rouleaux pour véhicules

(30) Priorität: 19.09.1988 DE 3831795
(43) Veröffentlichungstag der Anmeldung: 28.03.1990
(73) Patentinhaber: Bayerische Motoren Werke Aktiengesellschaft, 80788 München (DE)
(72) Erfinder: Angerer, Siegfried, D-8904 Friedberg (DE)

(56) Entgegenhaltungen:
- EP-A- 0 246 345
- DE-A- 3 040 355
- DE-A- 3 507 906
- FR-A- 2 263 500
- PATENT ABSTRACTS OF JAPAN, Band 6, Nr. 175 (P-141)(1053), 9. September 1982;& JP - A - 5791439
- A. ZOMOTOR: "Fahrwerkstechnik: Fahrverhalten", Vogel Verlag 1987, Würzburg, DE; Seiten 303,304

## Beschreibung

Die Erfindung bezieht sich auf einen Rollprüfstand nach dem Oberbegriff des Patentanspruchs 1.

Ein derartiger Rollenprüfstand ist beispielsweise aus der DE 36 30 231 A bekannt. Dieser Prüfstand entspricht im wesentlichen den bekannten Bremsprüfständen und enthält zwei antreibbare Trommeln, auf deren Außenfläche die beiden Räder eine Achse des Kraftfahrzeugs ablaufen. Die Fixierung des Kraftfahrzeugs erfolgt im wesentlichen mit Hilfe der Räder der anderen Achse, die in ortsfesten Aufspannrahmen in Längsrichtung des Kraftfahrzeugs angreifen. Zusätzlich sind dabei eine Abstützungen gegenüber Wänden vorgesehen, die außerhalb des Kraftfahrzeugs vorgesehen sind. Diese Abstützungen bestehen im wesentlichen aus aufblasbaren Bälgen.

Bei diesem Rollenprüfstand ist nur ein sehr eingeschränktes Prüfen des Kraftfahrzeugs möglich, da im wesentlichen lediglich die Bremswirkung der mit Hilfe der Trommel angetriebenen Räder untersucht werden kann. Zwar ist es auch möglich, Seitenkräfte durch Lenkbewegungen der angetriebenen Räder einzuleiten. Damit aber wird nur eine geringfügige Verbesserung der Prüfmöglichkeiten erzielt, da dann neben dem ohnehin nur in sehr beschränktem Umfang möglichen Einleiten von Seitenkräften auch die Reaktion der seitlichen Abstützungen zu berücksichtigen ist. Diese Reaktion entspricht wiederum nicht den tatsächlichen Verhältnissen, wie sie im realistischen Betrieb des Kraftfahrzeugs auftreten.

Zwar ist bei Prüfständen gattungsfremder Art versucht worden, das komplette Kraftfahrzeug in realistischer Weise zu untersuchen. Insbesondere geht es dabei stets um das Problem, die Auswirkungen von unterschiedlichen Fahrbahneigenschaften und Fahrbahnoberflächen sowohl hinsichtlich ihrer Beschaffenheit als auch hinsichtlich ihrer Höhenlage und die Reaktion des Kraftfahrzeugs, insbesondere seines Federungs- und Dämpfungssystems zu untersuchen. Die Prüfstände, mit denen derartiges untersucht werden soll, zeichnen sich aber dadurch aus, daß dabei erhebliche vorbereitende Maßnahmen, beispielsweise die Demontage der angetriebenen Räder und das Ersetzen der Räder durch entsprechende Antriebsvorrichtungen, erforderlich ist. Ein Beispiel hierfür findet sich in der DE-OS 35 07 906 A, in der ein derartiger Prüfstand beschrieben ist. Abgesehen von den erheblichen Rüstzeiten ist dabei aber gerade das wesentliche Element der Übertragungskette zwischen Fahrbahn und der Karosserie des Kraftfahrzeugs, nämlich das Fahrzeugrad, völlig eliminiert. Seine Wirkungen im Rahmen des gesamten Masse-Federsystems können daher nicht untersucht werden.

Aus dem Buch Fahrwerktechnik: Fahrverhalten von A. Zomotor, 1987, Vogel-Verlag, ist die Schwerpunktfesselung eines Kraftfahrzeugs auf einem Fahrdynamikprüfstand im Prinzip bekannt. Ferner ist aus der DE 30 40 355 A1 ein Prüfstand für Kraftfahrzeuge bekannt, bei dem die Räder auf separaten antreib- und abbremsbaren Abrollelementen in Form eines endlos umlaufenden Bandes aufliegen. Jedes dieser Abrollelemente ist in den drei Richtungen verstellbar. Bedingt durch die besondere konstruktive Gestaltung ist es dabei jedoch erforderlich, einen erheblichen Aufwand für die Fixierung der Abrollelemente im Raum gerade bei einer Verstellbewegung der Abrollelemente vorzusehen.

Der Erfindung liegt die Aufgabe zugrunde, einen Rollenprüfstand der eingangs genannten Art zu schaffen, mit dem bei betriebsfertigem, komplettem Kraftfahrzeug eine realistische Prüfung möglich ist und der sich durch einen einfachen konstruktiven Aufbau sowie die Möglichkeit auszeichnet, auch extreme Betriebsbedingungen des Kraftfahrzeugs im Labor zu simulieren.

Die Erfindung löst diese Aufgabe durch die kennzeichnenden Merkmale des Patentanspruchs 1.

Die Höhenverstellbarkeit der Trommeln unabhängig voneinander ermöglicht, beliebige Kräfte in vertikaler Richtung auf die Räder und damit über die Feder-Dämpfereinrichtungen des Kraftfahrzeugs auf dessen Karosserie einwirken zu lassen. Darüber hinaus ist durch den Angriff der Haltevorrichtung am Schwerpunkt stets eine realistische Prüfung möglich, die zudem so gestaltet werden kann, daß sie die Lenkbewegung der auf den Trommeln ablaufenden Rädern nicht behindert. Damit aber wird es möglich, beliebige und zeitlich unbegrenzte Seitenkräfte auf das Kraftfahrzeug einwirken zu lassen. Sämtliche auf das Kraftfahrzeug ausgeübten Kräfte können sämtlichen möglichen Betriebsbedingungen des Kraftfahrzeugs entsprechen und dabei auch im großen Rahmen unterschiedlich sein. Es ist sogar möglich, auch theoretisch mögliche und in der Praxis praktisch nie auftretende Betriebsbedingungen zu simulieren und damit auch unter derart extremen, praktisch unrealistischen Bedingungen eine Prüfung des Kraftfahrzeugs unter derart extremen Betriebsbeanspruchungen vorzunehmen.

In den weiteren Patentansprüchen 2 bis 12 sind vorteilhafte Ausgestaltungen der Erfindung beschrieben. Der Patentanspruch 13 sieht die Möglichkeit vor, nicht nur die Räder einer Achse, sondern die Räder beider Achsen des Kraftfahrzeugs mit Trommeln gem. dem Patentanspruch 1 anzutreiben und zu bewegen und damit für das gesamte Kraftfahrzeug ein Optimum an Testmöglichkeiten zu erzielen. Sämtliche Trommeln sind dabei unabhängig voneinander antreibbar und bewegbar. Die hierfür insgesamt vorgesehenen konstruktiven Ausgestaltungen, die in den Patentansprüchen 2 bis 12, angegeben sind, beziehen sich dabei nicht nur auf die Ausführungsform gem. dem Patentanspruch 1, bei der lediglich die Räder einer Achse durch zwei Trommeln angetrieben werden, sondern auch auf die Ausführungsform gemäß Patentanspruch 13, bei der sämtliche Räder des Kraftfahrzeugs in der beschriebenen Weise geprüft werden können.

Im einzelnen ergeben sich die besonderen Vorteile der Merkmale nach Patentanspruch
2 in einer Detaillierung dieses Aufbaus, die beispielsweise anstelle einer unterhalb der Trommeln angeordneten Einrichtung eine Vertikalbewegung der Trommeln ermöglicht,
3 in einer konstruktiv besonders vorteilhaften Ausbildung der Mittel zur Vertikalbewegung der Trommel,
4 in der größtmöglichen individuellen Einstellung der Trommel-Drehbewegung und auch der in die Trommeln einleitbaren Bremskräfte durch entsprechende Gestaltung des beispielsweise elektrischen oder hydraulischen Antriebs-Motors,
5 in dem besonders kompakten Aufbau des Prüfstands, aus dem sich insbesondere die Möglichkeit für weitere Belastungen durch Verstellung der Trommeln quer und/oder längs des Kraftfahrzeugs ergeben (Patentanspruch 6),
7 in der freien Zugänglichkeit des Kraftfahrzeugs auch während der Prüfung,
8 in einer weiteren Verbesserung durch Einbringen frei wählbarer Seitenkräfte,
9 in der einfachen Fixierung des Kraftfahrzeugs mit dem resultierenden Angriffspunkt stets im Schwerpunkt,
10 in der einfachen meßtechnischen Bestimmung der auftretenden Reaktionskräfte,
11 in einer Alternative zur Ausführungsform der Halteeinrichtung nach den Patentansprüchen 10 und 11 und
12 in einer besonders einfachen Entsorgung des Prüfraums von Abrieb oder zusätzlichen auf das Kraftfahrzeug oder die Trommeln aufbringbaren Prüfmaterialien, wie Sand, Schnee, Wasser und dgl..

In der Zeichnung ist ein Ausführungsbeispiel der Erfindung dargestellt. Dabei zeigt:
- Fig. 1: eine Vorderansicht eines erfindungsgemäßen Rollenprüfstands, teilweise im Querschnitt,
- Fig. 2: eine Seitenansicht, teilweise als Längsschnitt, des Prüfstands von Fig. 1,
- Fig. 3: eine Draufsicht bzw. einen Teil-Höhenschnitt des Prüfstands und
- Fig. 4: mit den Teilen a) und b) eine alternative Haltevorrichtung des Kraftfahrzeugs.

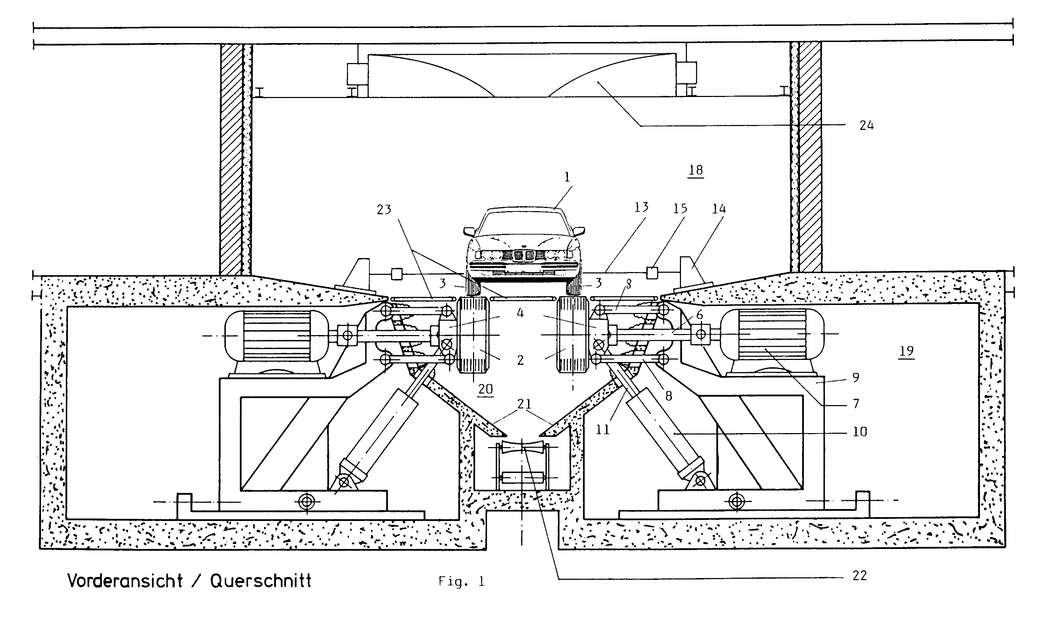

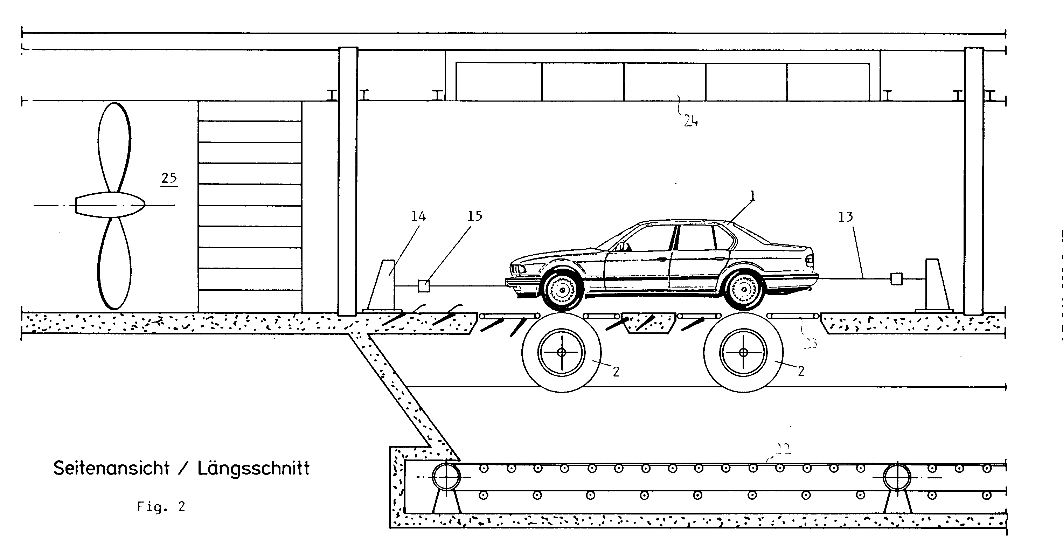

Beim Ausführungsbeispiel nach den Fig. 1 bis 3 ist ein komplettes, betriebsfertiges Kraftfahrzeug 1 auf vier fahrzeuggerecht angeordneten Lauf-Trommeln 2 gelagert. Dabei läuft jedes der vier Räder 3 des Kraftfahrzeugs 1 auf einer zugeordneten Trommel 2.

Jeder der Trommeln 2 ist an einem Halteteil 4 drehbar gelagert, an dem eine Parallelführung 5 angreift und durch das hindurch eine Antriebswelle 6 zum Antrieb der Trommeln 2 greift. Die Antriebswellen 6 sind als homokinetische Gelenkwellen ausgebildet und jeweils mit einem Antriebs- und Bremsmotor 7 verbunden. Die Parallelführung 5 besteht jeweils aus vier Lenkern 8, die paarweise parallel zueinander angeordnet sind und von denen jeweils zwei konisch zum Halteteil 4 hin verlaufen. Jeder der Lenker 8 ist seinerseits mit seinem anderen Ende drehbar in einem Rahmen 9 gehalten.

Der Rahmen 9 trägt den Antriebs- und Bremsmotor 7, die Antriebswelle 6, das Halteteil 4 sowie die Trommel 2 und ist ferner, bezogen auf das Kraftfahrzeug 1 in Längs-und Querrichtung verschiebbar. Ferner hält er das eine Ende eines Stellglieds 10, das mit seinem anderen Ende am Halteteil 4 angelenkt ist und das die Höhenlage der Trommel 2 einstellt. Hierzu ist das Stellglied 10 als hydraulischer Zylinder ausgebildet, der ein längs verstellbares Teil 11 besitzt und damit durch Variation der Lage dieses Teiles 11 die Höhenlage der Trommel 2 bestimmt. Durch die Parallelführung 5 wird erreicht, daß bei Anderung der Höhenlage der Trommel 2 diese ihre waagrechte Drehachse beibehält.

Durch entsprechende Wahl und Variation des Antriebs- und Bremsmoments der Antriebs- und Bremsmotore 7, der Höhenlage der Trommeln 2 durch entsprechende (veränderliche) Einstellung des Stellglieds 10 und durch Einstellen der Längs- und Querlage des Rahmens 9 wird es somit möglich, sämtliche Betriebsbedingungen des Kraftfahrzeugs zu simulieren und damit reproduzierbar die Reaktion des Kraftfahrzeugs zu ermitteln.

Hierzu ist ferner eine Haltevorrichtung in Form von Halteseilen 13 vorgesehen, die vertikal frei mitschwingend ausgebildet sind. Die Seile 13 sind in verstellbaren Säulen 14 verankert, welche auch kugelgelagerte Seilausgleichsvorrichtungen (vertikal) enthalten (nicht dargestellt). Die Bestimmung der Reaktionskräfte erfolgt mit Hilfe von integrierten Kraftgebern 15.

Wesentlich für die Wirkungsweise des dargestellten Rollenprüfstands ist der resultierende Angriffspunkt der Halteseile 13. Diese ist so gewählt, daß er nicht nur in der dargestellten Ruhelage, sondern - über die Höhenverstellbarkeit der Halteseile 13 erzielt - auch unter den gesamten auftretenden Prüfbedingungen mit dem Schwerpunkt des Kraftfahrzeugs 1 zumindest näherungsweise zusammenfällt. Auf diese Weise wird der Einfluß der Haltevorrichtung, wie sie hier durch die Halteseile 13 gebildet ist, auf die Meßergebnisse weitgehend eliminiert.

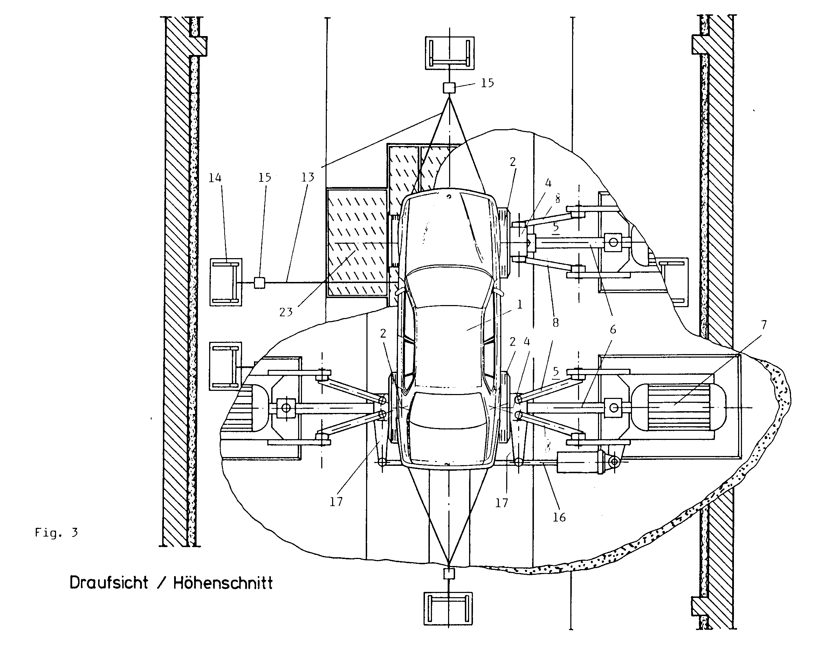

Eine weitere Verbesserung des dargestellten Rollenprüfstands ist insbesondere in Fig. 3 zu erkennen. Diese besteht in der Möglichkeit, die Trommeln 2 zumindest für eine Achse lenkbar auszubilden. Durch ein Lenkgestänge 16, das über einen Längslenker 17 an jeder der beiden Trommeln angreift, wird es möglich, diese um eine - bezogen auf das Kraftfahrzeug 1 - Hochachse zu verstellen und damit beliebige Seitenkräfte einzuleiten. Nicht dargestellt, aber ebenfalls möglich, ist auch das Trommelpaar für die anderen Räder in entsprechender Weise lenkbar. Damit werden insbesondere in Hinblick auf moderne Vierradlenkungen realitätsgerechte Prüfungen des Kraftfahrzeugs möglich.

Als Trommeln 2 kommen vorzugsweise Stahl- oder Aluminiumräder mit Gummibereifung aus dem Nutzfahrzeugbereich zur Anwendung. Der Durchmesser dieser Trommeln 2, an der Lauffläche gemessen, kann je nach Größe des Prüflings, d.h. der Räder 3 des Kraftfahrzeugs 1, zwischen 800mm und 1.800mm betragen. Zweckmäßigerweise soll der Durchmesser der Trommeln 2 den doppelten Durchmesser der darauf abrollenden Räder 3 aufweisen. Die Gummilauffläche der Trommeln 2 kann je nach Anforderung profiliert oder profillos sein.

Der Einbau der vier Einheiten erfolgt in einem unter dem eigentlichen Prüfraum 18 liegenden Untergeschoß 19, wobei der direkt unter dem Kraftfahrzeug 1 befindliche Raum 20 als Rinne 21 ausgebildet ist. Am Boden der Rinne 21 ist ein Förderband 22 eingebaut. Innerhalb der Rinne 21 befinden sich nur die korrosions- und verschleißfest ausgelegten Trommeln 2 mit den zugehörigen Parallelführungen 5. Außerhalb der Rinne in einem davon hermetisch dichten Raum des Untergeschosses 19 sind alle übrigen Einrichtungen untergebracht.

Der Scheitelpunkt der Trommel 2 ist für die konstruktive Nullage bodeneben eingestellt und mit vertikal mitbeweglichen Verkleidungen 23 umgeben. Der gesamte Prüfraum 18 ist in einem Windkanal 25 und einer Umweltsimulationskammer untergebracht. Innerhalb des Windkanals 25 sind Einrichtungen vorhanden (nicht dargestellt), die das Kraftfahrzeug mit Split, Salzwassernebel, Sprühwasser, Industriegasen, Kälte, Wärme, Schwitzwasser und Schnee beaufschlagen können. Für die Beaufschlagung des Kraftfahrzeugs 1 mit terrestrischer Strahlung ist zusätzlich eine aus mehreren entsprechenden Leuchten bestehende Einrichtung 24 an der Decke des Prüfraums 18 angeordnet.

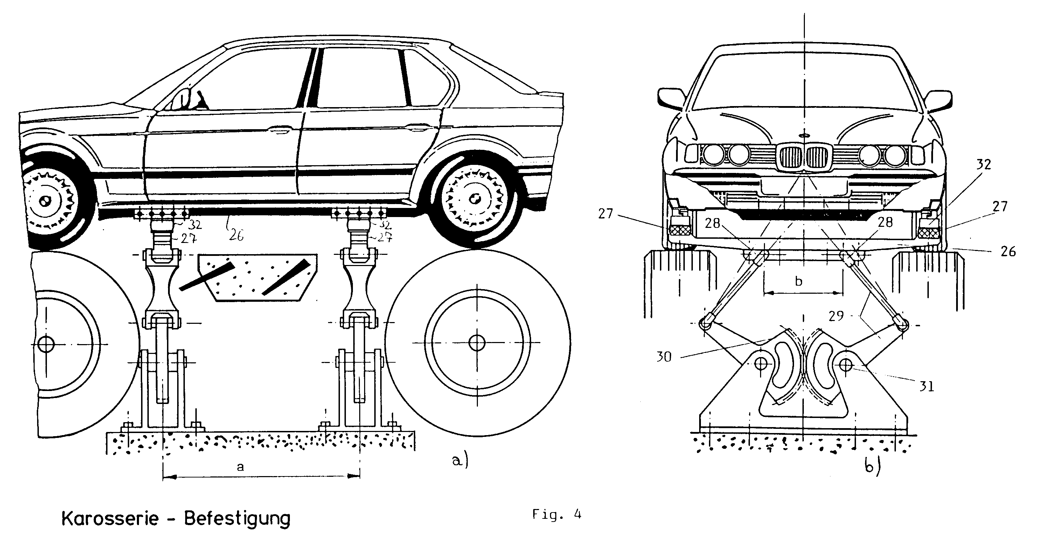

Beim Ausführungsbeispiel von Fig. 4 ist eine Alternative zur Haltevorrichtung mit Hilfe der Halteseile 13 vorgesehen, wie sie in den Fig. 1 bis 3 dargestellt ist. Die hier dargestellte Haltevorrichtung fixiert das Kraftfahrzeug 1 ebenfalls horizontal und läßt es vertikal frei schwingen. Sie ist unterhalb des Kraftfahrzeugs etwa in der Fahrzeugmitte angeordnet. Sie besteht aus einer Grundplatte 26, die über Gummielemente 27 an den Schwellern oder anderen geeigneten Stellen des Kraftfahrzeugs bzw. der Fahrgastzelle befestigt sind. In die Grundplatte integriert sind zwei im Gelenkabstand einstellbare Doppelgelenkanschlüsse 28 mit definiertem Abstand a in Längsrichtung angeordnet. An die Doppelgelenkanschlüsse 28 ist je ein Kniehebel 29 angeschlossen, der quer zur Fahrtrichtung mittels eines Zahnsegments 30 und in Fahrtrichtung durch entsprechende Gelenklager 31 momentensteif ausgebildet ist. Vertikal ist somit eine ungehinderte Bewegung des Kraftfahrzeugs möglich. Der verstellbare Doppelgelenkabstand b ermöglicht eine Lageveränderung des tatsächlichen Gelenkdrehpunktes, womit dieser den fahrzeugspezifischen Gegebenheiten angepaßt werden kann.

In sämtlichen Ausführungsformen kann die Bedienung des Kraftfahrzeugs mittels bekannter Fahrroboter oder auch durch einen Fahrer erfolgen.

Der erfindungsgemäße Prüfstand ermöglicht eine realitätsnahe Belastung des Kraftfahrzeugs. Die auf das Kraftfahrzeug wirkenden komplexen Belastungen des realen Fahrbetriebs lassen sich in einzelne Komponenten zerlegen, deren Funktion am Prüfstand wieder erzeugt wird.

Die Vertikalbelastung infolge von Straßenunebenheiten erfolgt über die entsprechend einem vorgegebenen Straßenprofil angesteuerte Vertikalbewegung der Trommeln 2.
Die Seitenkräfte an der Vorderachse werden ebenso wie im realen Fahrbetrieb über den Schräglaufwinkel der Räder 2, der durch die Lenkbewegung entsteht, aufgebracht. An der Hinterachse wird anstelle der Fahrzeugschrägstellung eine Schrägstellung der Trommeln 2 über die Lenker 16 und 17 vorgenommen. Dadurch entsteht auch an der Hinterachse ein Schräglaufwinkel und damit eine Seitenkraft. Die Schrägstellung der beiden Trommeln 2 kann synchron oder in beliebigen Funktionen zueinander durchgeführt werden, womit auch die Möglichkeit für Sonderuntersuchungen gegeben ist.

Die Längsbelastung infolge von Beschleunigungen, Verzögern und Bremsen sowie unterschiedlichen Geschwindigkeiten der einzelnen Räder wird über die Drehbewegung der Trommeln 2 und den daran angekoppelten bzw. diese antreibenden Motore 7 im Vier-Quadranten-Betrieb erzeugt.

Über die horizontale Halterung des Kraftfahrzeugs und mittels der in den Halteseilen 13 integrierten Kraftgebern 15 werden die Reaktionskräfte gemessen. Diese Meßsignale können in den Regelkreisen der verschiedenen Stellglieder zur Regelung miteingeschleust werden. Entsprechendes gilt für die Haltevorrichtung entsprechend Fig. 4. Dabei sind die Kraftgeber 32 zwischen der Haltevorrichtung und dem Kraftfahrzeug 1 angeordnet.

Schließlich kann die Umweltbelastung auch in Verbindung mit der mechanischen Belastung ausgeübt werden. Dabei dient das Förderband 22 zur Beseitigung des Schmutzanfalles.

## Patentansprüche

1. Rollenprüfstand für Kraftfahrzeuge, mit zwei drehbaren Trommeln (2) für die beiden Räder (3) einer Achse des Kraftfahrzeugs und mit einer Haltevorrichtung für das komplette, betriebsfertige Kraftfahrzeug (1), dadurch gekennzeichnet, daß die beiden Trommeln (2) unabhängig voneinander jeweils durch eine Parallelführung (5), die an einem Halteteil (4) für die Trommeln (2) gelenkig angreift, vertikal mit gleichbleibend waagrechter Drehachse statisch und dynamisch verstellbar sind und daß die Haltevorrichtung am Schwerpunkt des Kraftfahrzeugs (1) resultierend angreift.

2. Rollenprüfstand nach Anspruch 1, dadurch gekennzeichnet, daß die Parallelführung (5) durch vier Lenker (8) gebildet ist, die paarweise parallel zueinander und zum Halteteil hin aufeinanderzu verlaufen.

3. Rollenprüfstand nach Anspruch 1 oder 2, gekennzeichnet durch ein Stellglied (10,11) für die Höhenlage des Halteteils (4).

4. Rollenprüfstand nach einem der Ansprüche 1 bis 3, gekennzeichnet durch einen jeder Trommel (2) zugeordneten separaten Antrieb.

5. Rollenprüfstand nach Anspruch 1, 3 und 4, dadurch gekennzeichnet, daß der Antrieb (7), die Parallelführung (5) und das Stellglied (10,11) an einem gemeinsamen Rahmen (9) gelagert sind.

6. Rollenprüfstand nach Anspruch 5, dadurch gekennzeichnet, daß der Rahmen (5) in Längs-und/oder Querrichtung des Kraftfahrzeugs (1) verstellbar ist.

7. Rollenprüfstand nach Anspruch 5 oder 6, dadurch gekennzeichnet, daß der Rahmen (5) unterhalb des Kraftfahrzeugs (1) angeordnet ist.

8. Rollenprüfstand nach einem der Ansprüche 1 bis 7, dadurch gekennzeichnet, daß die beiden Trommeln (2) gelenkig miteinander verbunden und gemeinsam je um eine Hochachse des Kraftfahrzeugs (1) schwenkbar sind.

9. Rollenprüfstand nach einem der Ansprüche 1 bis 8, dadurch gekennzeichnet, daß die Haltevorrichtung aus mehreren am Kraftfahrzeug angreifenden Halteseilen (13) besteht.

10. Rollenprüfstand nach Anspruch 9, dadurch gekennzeichnet, daß jedes Halteseil (13) mit einer Kraftmeßeinrichtung (14) verbunden ist.

11. Rollenprüfstand nach einem der Ansprüche 1 bis 8, dadurch gekennzeichnet, daß die Haltevorrichtung zwei miteinander gekoppelte Kniegelenke (29) aufweist, die an ihrem einem Ende zwei miteinander kämmende und um eine waagrechte Achse schwenkbare Zahnsegmente (30) aufweisen und die mit ihren anderen Enden am Kraftfahrzeug angreifen.

12. Rollenprüfstand nach einem der Ansprüche 1 bis 11, dadurch gekennzeichnet, daß die Trommeln (2) über einer Rinne (21) liegen, an deren Fuß ein Transportband (22) angeordnet ist.

13. Rollenprüfstand nach einem der Ansprüche 1 bis 12, dadurch gekennzeichnet, daß auch für die beiden Räder (3) der anderen Achse Trommeln (2) entsprechend den in den Patentansprüchen 1 bis 13 enthaltenen Merkmalen vorgesehen sind.

## Claims

1. A roll test stand for motor vehicles, comprising two rotatable drums (2) for the two wheels (3) on an axle of the vehicle and a device for retaining the complete vehicle (1) ready for operation, characterised in that the two drums (2) are statically and dynamically adjusted independently of one another, vertically and with a uniformly horizontal axis of rotation, by a parallel guide (5) which pivotably engages a component (4) for retaining the drums (2), and the retaining device acts accordingly at the centre of gravity of the vehicle (1).

2. A roll test stand according to claim 1, characterised in that the parallel guide (5) is formed by four guide rods (8) disposed in parallel pairs and converging towards the retaining part.

3. A roll test stand according to claim 1 or 2, characterised by an actuator (10, 11) for vertically adjusting the retaining part (4).

4. A roll test stand according to any of claim 1 to 3, characterised by a separate drive associated with each drum (2).

5. A roll test stand according to claims 1, 3 and 4, characterised in that the drive (7), the parallel guide (5) and the actuator (10, 11) are mounted in a common frame (9).

6. A roll test stand according to claim 5, characterised in that the frame (5) is adjustable in the longitudinal and/or transverse direction of the vehicle (1).

7. A roll test stand according to claim 5 or 6, characterised in that the frame (5) is disposed underneath the vehicle (1).

8. A roll test stand according to any of claims 1 to 7, characterised in that the two drums (2) are pivotably connected and pivotable in common, each around a vertical axis of the vehicle (1).

9. A roll test stand according to any of claims 1 to 8, characterised in that the retaining device comprises a number of cables (13) engaging the vehicle.

10. A roll test stand according to claim 9, characterised in that each retaining cable (13) is connected to a dynamometer (14).

11. A roll test stand according to any of claims 1 to 8, characterised in that the retaining device has two toggle joints (29) coupled together and provided at one end with a toothed segment (30), the two segments meshing and being pivotable around a horizontal axis, whereas the other ends of the toggle joints engage the vehicle.

12. A roll test stand according to any of claims 1 to 11, characterised in that the drums (2) are disposed above a channel (21) at the base of which a conveyor belt (22) is disposed.

13. A roll test stand according to any of claims 1 to 12, characterised in that drums (2) having the features in claims 1 to 13 are provided for the two wheels (3) on the other axle also.

## Revendications

1. Banc d'essai à rouleaux, équipé de deux rouleaux (2) associés aux deux roues (3) d'un essieu d'une automobile et d'un système de maintien du véhicule (1) complet en état de marche, caractérisé en ce que les deux rouleaux (2) peuvent se déplacer, indépendamment l'un de l'autre par l'intermédiaire d'un dispositif de guidage parallèle (5), articulé à un palier (4) portant le rouleau (2), verticalement à l'arrêt ou en marche en conservant leurs axes horizontaux, la résultante des actions du système de maintien est appliquée au centre de gravité du véhicule (1).

2. Banc d'essai selon la revendication 1, caractérisé en ce que le dispositif de guidage parallèle (5) est constitué de quatre bielles (8), parallèles deux par deux et dirigées en convergence sur le palier (4).

3. Banc d'essai selon la revendication 1 ou 2, caractérisé en ce qu'il comporte un positionnement (10, 11) réglant la hauteur du palier (4).

4. Banc d'essai selon l'une des revendications 1 à 4, caractérisé en ce que chaque rouleau (2) possède un entraînement indépendant.

5. Banc d'essai selon les revendications 1, 3 et 4, caractérisé en ce que l'entraînement (7), le dispositif de guidage parallèle (5) et le positionnement (10, 11) sont montés sur un châssis commun (9).

6. Banc d'essai selon la revendication 5, caractérisé en ce que le châssis (5) peut se déplacer transversalement ou longitudinalement par rapport au véhicule.

7. Banc d'essai selon la revendication 5 ou 6, caractérisé en ce que le châssis (5) est disposé en-dessous du véhicule (1).

8. Banc d'essai selon l'une des revendications 1 à 7, caractérisé en ce que les deux rouleaux (2) sont reliés pour une articulation et peuvent pivoter ensemble autour d'axes verticaux par rapport au véhicule (1).

9. Banc d'essai selon l'une des revendications 1 à 8, caractérisé en ce que le système de maintien est constitué de plusieurs câbles de maintien (13) accrochés au véhicule.

10. Banc d'essai selon la revendication 9, caractérisé en ce que chaque câble de maintien (13) est équipé d'un dispositif dynamométrique (14).

11. Banc d'essai selon l'une des revendications 1 à 9, caractérisé en ce que le système de maintien comporte deux genouillères (29) accouplées, dont chacune a une extrémité pivotant autour d'un axe horizontal associé à un secteur denté en prise avec son homologue de l'autre genouillère, tandis que l'autre extrémité de chaque genouillère est en prise avec le véhicule.

12. Banc d'essai selon l'une des revendications 1 à 11, caractérisé en ce que les rouleaux (2) sont situés au-dessus d'une rigole (21) au fond de laquelle est placée une bande transporteuse (22).

13. Banc d'essai selon l'une des revendications 1 à 12, caractérisé en ce qu'il est prévu également, pour les deux roues (3) de l'autre essieu, des rouleaux présentant les caractéristiques des revendications 1 à 13.
